**Europäisches Patentamt**

**European Patent Office**

**Office européen des brevets**

(11) Veröffentlichungsnummer : **0 153 765 B2**

(12) **NEUE EUROPÄISCHE PATENTSCHRIFT**

(45) Veröffentlichungstag der neuen Patentschrift :
26.08.92 Patentblatt 92/35

(51) Int. Cl.$^5$ : **A01B 61/02, A01B 49/00**

(21) Anmeldenummer : **85103774.7**

(22) Anmeldetag : **31.08.82**

(54) **Geräteverbund zur landwirtschaftlichen Bodenbearbeitung.**

(30) Priorität : 28.04.82 DE 8212168 U
12.05.82 DE 8213692 U
25.06.82 DE 8218233 U

(43) Veröffentlichungstag der Anmeldung :
04.09.85 Patentblatt 85/36

(45) Bekanntmachung des Hinweises auf die
Patenterteilung :
02.11.89 Patentblatt 89/44

(45) Bekanntmachung des Hinweises auf die
Entscheidung über den Einspruch :
26.08.92 Patentblatt 92/35

(84) Benannte Vertragsstaaten :
**DE FR GB IT**

(56) Entgegenhaltungen :
DE-A- 1 757 310
DE-A- 2 546 080
DE-A- 2 624 902
DE-B- 1 029 604
DE-B- 2 825 109
DE-U- 1 984 361
DE-U- 7 628 831

(56) Entgegenhaltungen :
FR-A- 1 069 012
FR-A- 1 333 905
GB-A- 1 229 392
US-A- 2 541 964
US-A- 2 573 221
US-A- 3 021 908
US-A- 3 056 458

(60) Veröffentlichungsnummer der früheren
Anmeldung nach Art. 76 EPÜ : **0 093 193**

(73) Patentinhaber : **Maschinenfabrik Rau GmbH
Johannes-Rau-Strasse
W-7315 Weilheim (DE)**

(72) Erfinder : **Rau, Willy
Johannes-Rau-Strasse
W-7315 Weilheim (DE)**
Erfinder : **Taus, Christian
Galgenberg 19
W-7312 Kirchheim (DE)**

(74) Vertreter : **Dipl.-Phys.Dr. Manitz Dipl.-Ing.
Finsterwald Dipl.-Ing. Grämkow Dipl.-Chem.Dr.
Heyn Dipl.-Phys. Rotermund
Morgan,B.Sc.(Phys)
Seelbergstrasse 23/25
W-7000 Stuttgart 50 (DE)**

EP 0 153 765 B2

## Beschreibung

Die Erfindung betrifft einen Geräteverbund zur landwirtschaftlichen Bodenbearbeitung, mit einem bockartigen Rahmen, welcher - vorzugsweise mittels Dreipunktgestänges - anhebbar an ein Zug- bzw. Schlepperfahrzeug ankoppelbar ist und ein vorderes, vorzugsweise austauschbares Bodenbearbeitungsgerät trägt, z.B. Grubber- oder Scharwerkzeuge und/oder zapfwellengetriebene Geräte, wie Zinkenrotoren, und mit einem Tragrahmen, der ein weiteres Gerät, wie Krümlerwalze, trägt und als Verlängerung des bockartigen Rahmens nach Art einer Schwinge um eine Querachse schwenkbar am bockartigen Rahmen angeordnet ist, wobei der am Zug- bzw. Schlepperfahrzeug höhenbeweglich halterbare bockartige Rahmen sowie das daran angeordnete Bodenbearbeitungsgerät bei der Bodenarbeit durch das am Tragrahmen angeordnete weitere Gerät bzw. die Krümlerwalze abstützbar sind, indem zwischen bockartigem Rahmen und Tragrahmen ein den Schwenkhub des Tragrahmens relativ zum bockartigen Rahmen nach oben begrenzendes teleskopartiges Gestänge mit einem ersten, am Bock angelenkten Gestängeteil sowie einem zweiten, damit verbundenen bzw. verbindbaren, am Tragrahmen angelenkten Gestängeteil angeordnet ist, und wobei dieses Gestänge spielbehaftet ist, derart, daß der bockartige Rahmen mit dem daran angeordneten Bodenbearbeitungsgerät relativ zum Tragrahmen bzw. zur Krümlerwalze nach oben ausweichen kann, z.B. wenn das Bodenbearbeitungsgerät auf Steine od.dgl. stößt.

Ein derartiger Geräteverbund ist aus dem DE-U 19 84 361 bekannt. Zur Abstützung des bockartigen Rahmens auf dem Tragrahmen dient ein am Tragrahmen angelenktes Druckrohr mit einer an seinem gelenkfernen Ende angeordneten Gewindemutter sowie einer darin bzw. in das Druckrohr eingeschraubten Gewindespindel, deren vom Druckrohr entferntes Ende am Oberteil des bockartigen Rahmens in einer gelenkigen Halterung drehgelagert ist. Durch Drehverstellung der Gewindespindel in der Gewindemutter kann also die Länge der Abstützung eingestellt bzw. verändert werden. Das Druckrohr kann aus zwei Teilen bestehen, die sich teleskopartig in einem festgelegten Bereich bis zu einem Anschlag gegen die Kraft einer zwischen ihnen wirksamen Druckfeder ineinander einschieben lassen. Bei der normalen Bodenarbeit sind die beiden Teile des Druckrohres bis zum genannten Anschlag ineinander eingeschoben, so daß im Normalfalle eine starre Abstützung des bockartigen Rahmens auf dem Tragrahmen gewährleistet ist. Sollte jedoch das am bockartigen Rahmen angeordnete Gerät auf Bodenunebenheiten u.dgl. stoßen, so vermag es zu "springen", ohne daß dabei die am Tragrahmen angeordnete Krümlerwalze ihre Bodenberührung verlieren muß. Hierbei werden die beiden Teile des Druckrohres unter Entspannung der Druckfeder vorübergehend auseinandergezogen.

Bei einem aus der FR-A 13 33 905 bekannten Geräteverbund wird die Höhenlage eines bockartigen Rahmens sowie eines daran angeordneten Bearbeitungsgerätes durch entsprechende Einstellung des Dreipunktgestänges relativ zum Zug- bzw. Schlepperfahrzeug festgelegt. Das am Tragrahmen angeordnete weitere Gerät, eine Sämaschine, ist relativ zum bockartigen Rahmen höhenbeweglich angeordnet, denn die durch den Tragrahmen des weiteren Gerätes gebildete Schwinge ist relativ zum bockartigen Rahmen frei schwenkbar gehaltert. Zwischen dem bockartigen Rahmen und dem Tragrahmen ist lediglich eine Kette angeordnet, welche den Schwenkhub des Tragrahmens relativ zum bockartigen Rahmen nach unten begrenzt, derart, daß das am Tragrahmen angeordnete weitere Gerät vom Boden abgehoben werden kann, wenn der bockartige Rahmen sowie das daran angeordnete Bodenbearbeitungsgerät durch entsprechende Betätigung des Dreipunkgestandes aus ihrer Arbeitslage in eine Transportlage angehoben werden. Da bei diesem bekannten Geräteverbund der bockartige Rahmen während der Bodenarbeit praktisch höhenunbeweglich relativ zum Zug- bzw. Schlepperfahrzeug geführt wird, führt das am bockartigen Rahmen gehalterte Bodenbearbeitungsgerät die gleichen Vertikalbewegungen wie das Zug- bzw. Schlepperfahrzeug aus, welches bei der Bodenarbeit in der Regel über unbearbeiteten und damit relativ unebenen Boden fährt.

Aus der US-A 25 73 221 ist es bekannt, einen Pflug od. dgl. mittels eines Dreipunktgestänges an einem Zug- bzw. Schlepperfahrzeug anzuordnen, wobei die Höhenlage des Pfluges relativ zum Zug- bzw. Schlepperfahrzeug durch entsprechende Einstellung des Dreipunktgestänges bestimmt wird. Bei der Bodenarbeit werden die Unterlenker des Dreipunktgestänges regelmäßig durch Zugkäle und der Oberlenker des Dreipunktgestänges durch Druckkräfte beansprucht. Falls das Zug- bzw. Schlepperfahrzeug mit seinen Hinterrädern durch eine Mulde fährt, wird der Pflug verstärkt in den Boden gedrängt. Bei tieferen Mulden kann dies dazu führen, daß die Hinterräder und damit die Antriebsräder des Zug- bzw. Schlepperfahrzeuges unerwünscht entlastet werden, weil der Pflug nicht ohne weiteres tiefer in die Erde eindringen kann und dementsprechend ein großer Anteil des Gewichtes des Zug- bzw. Schlepperfahrzeuges über den Pflug abgestützt wird. Dies kann dazu führen, daß die Antriebsräder des Zug- bzw. Schlepperfahrzeuges durchdrehen und das Zug- bzw. Schlepperfahrzeug stehenbleibt. Um Derartiges zu vermeiden, ist nach der US-A-25 73 221 vorgesehen, den Oberlenker des Dreipunktgestänges als Kniehebel auszubilden, welcher eine gestreccke Übertotpunktlage einzunehmen vermag, in der der Kniehebel Druckkräfte zwischen Pflug und Zug- bzw. Schlepperfahrzeug übertragen kann. Falls nun der Pflug die Hinterräder des Zug- bzw. Schlepperfahrzeuges, beispielsweise in

2

Erdmulden, unerwünscht anzuheben sucht, kann das Kniegestänge durch Betätigung eines Griffes aus seiner relativ gestreckten Lage über seine Totpunktstellung hinweg in eine Winkelstellung gebracht werden, in der praktisch keine Druckkräfte zwischen Pflug und Zug- bzw. Schlepperfahrzeug übertragen werden können, d. h. der Pflug kann relativ zum Zug- bzw. Schlepperfahrzeug einen Schwenkhub nach oben ausführen, wobei die Antriebsräder des Zug- bzw. Schlepperfahrzeuges durch dessen Gewicht belastet werden. Sobald das Zug- bzw. Schlepperfahrzeug die Erdmulde durchfahren hat, schwenkt der Pflug durch sein Eigengewicht wiederum relativ zum Zug- bzw. Schlepperfahrzeug nach unten, wobei der Oberlenker wieder seine gestreckte Übertotpunktlage einnimmt, so daß nachfolgend wiederum eine normale Bodenarbeit mit dem Pflug möglich ist.

Der Vorteil dieser Anordnung liegt darin, daß die Höheneinstellung der Unterlenker des Dreipunktgestänges relativ zum Zugfahrzeug beim Hochschwenken des Pfluges nicht verändert werden muß, d. h. bei der nachfolgenden Bodenarbeit nimmt der Pflug wiederum seine vorher eingestellte Höhenlage relativ zum Zug- bzw. Schlepperfahrzeug ein. Jedoch führt der Pflug bei der Bodenarbeit grundsätzlich die gleichen Vertikalbewegungen wie das Zug- bzw. Schlepperfahrzeug aus, welches in der Regel über unbearbeiteten Boden fährt.

Die FR-A-10 69 012 zeigt ebenfalls ein Zug- bzw. Schlepperfahrzeug, an dem mittels eines Dreipunktgestänges ein Pflug mit mehreren hintereinander angeordneten Pflugscharen angeordnet ist. Die Höhenlage des Pfluges relativ zum Zug- bzw. Schlepperfahrzeug wird durch entsprechende Einstellung des Dreipunktgestänges bestimmt. Um zu Beginn der Bodenarbeit ein Eindringen der Pflugscharen in den Boden zu erleichtern, bzw. um das Austreten der Pflugscharen nach Beendigung der Bodenarbeit aus dem Boden mit geringerem Kraftaufwand ausführen zu können, kann die Länge des Oberlenkers des Dreipunktgestänges verändert werden, derart, daß der Rahmen des Pfluges eine geneigte Stellung einnimmt, bei der die vorderen Pflugscharen entweder tiefer oder höher als die hinteren Pflugscharen liegen. Bei der Fahrt des Zug- bzw Schlepperfahrzeuges haben dann die Pflugscharen die Tendenz, entweder tiefer in den Boden einzuschneiden oder aus dem Boden herauszukommen. Auch bei dieser bekannten Anordnung führt das am Dreipunktgestänge angeordnete Gerät während der Bodenarbeit grundsätzlich die gleichen Vertikalbewegungen wie das Zug- bzw. Schlepperfahrzeug aus.

Aufgabe der Erfindung ist es nun, einen Geräteverbund der eingangs angegebenen Art zu schaffen, bei dem sich die Abstützung zwischen bockartigem Rahmen und Tragrahmen durch einfache Konstruktion und leichte Einstellbarkeit auszeichnet.

Diese Aufgabe wird erfindungsgemäß durch die kennzeichnenden Merkmale des Patentanspruches gelöst.

Bei der normalen Bodenarbeit wird das Gewicht des bockartigen Rahmens sowie des daran angeordneten Bodenbearbeitungsgerätes über das am Tragrahmen angeordnete weitere Gerät auf den Boden übertragen. Wenn also am Tragrahmen eine Krümlerwalze angeordnet ist, so wird dieselbe auch durch das Gewicht des bockartigen Rahmens sowie des daran angeordneten Bodenbearbeitungsgerätes belastet. Gegebenenfalls kann noch eine zusätzliche Belastung dadurch auftreten, daß das am bockartigen Rahmen angeordnete Bodenbearbeitungsgerät bei seiner Arbeit Kräften ausgesetzt wird, die dieses Bodenbearbeitungsgerät in den Boden einzusenken suchen. Beispielsweise neigt ein Zinkenrotor in der Regel dazu, sich "einzugraben". Dementsprechend besteht die Möglichkeit, daß auch gewichtsmäßig leichtes Gerät am Tragrahmen, beispielsweise eine leicht konstruierte Krümlerwalze, bei der Arbeit hinreichend stark belastet wird.

Da das am Tragrahmen angeordnete Gerät über bereits bearbeiteten und damit relativ ebenen Boden fährt, führt das am bockartigen Rahmen angeordnete und über das weitere Gerät abgestützte Bodenbearbeitungsgerät entsprechend wenig Vertikalbewegungen aus.

Die erfindungsgemäß ausgebildete Abstützung des bockartigen Rahmens auf dem Tragrahmen kann einerseits das gewünschte Bewegungsspiel zwischen den beiden Rahmen ermöglichen. Wenn beispielsweise das am bockartigen Rahmen angeordnete Bodenbearbeitungsgerät bzw. ein Einzelwerkzeug desselben, beispielsweise ein Zinken eines Zinkenrotors, beim Auftreffen auf Steine od.dgl. nach oben auszuweichen sucht, kann nämlich das genannte Bodenbearbeitungsgerät sich sowie den bockartigen Rahmen aufgrund des durch den Stein od.dgl. verursachten Widerstandes nach oben anheben, ohne gleichzeitig den Tragrahmen sowie das daran angeordnete weitere Gerät anzuheben.

Andererseits ist gegebenenfalls auch eine starre Abstützung zwischen dem bockartigen Rahmen und dem Tragrahmen herstellbar.

Darüber hinaus ist eine Verstellung sehr einfach möglich:
Dazu wird der bockartige Rahmen mittels des Dreipunktgestänges od.dgl. vom Zug- bzw. Schlepperfahrzeug aus etwas angehoben, so daß die teleskopartige Anordnung entlastet wird. Nun kann der zur Begrenzung des maximalen Ein-schubweges der beiden Teile dienende Anschlag ohne weiteres verstellt werden.

Nachfolgend wird die Erfindung anhand der Zeichnung erläutert. Dabei zeigen

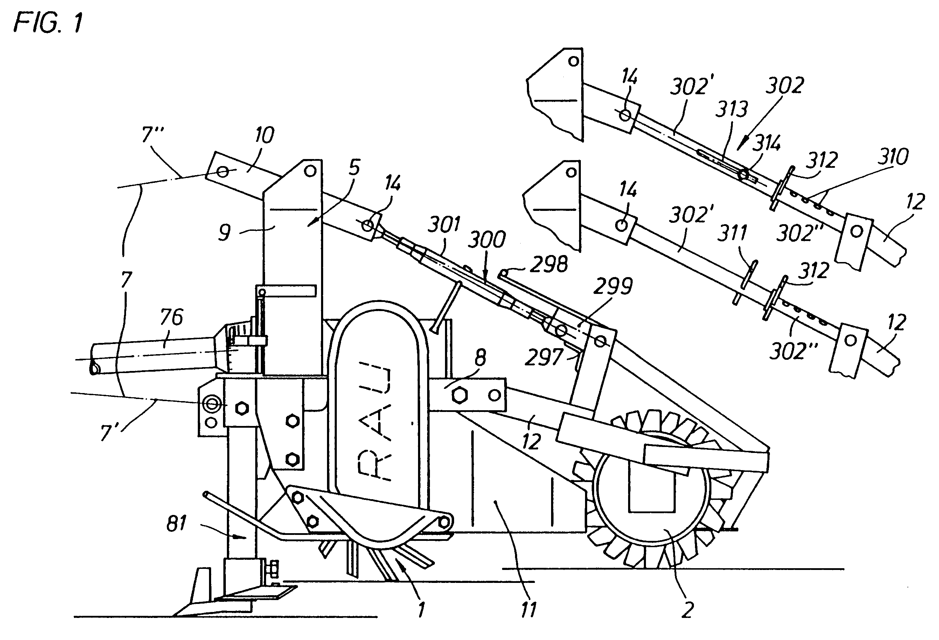

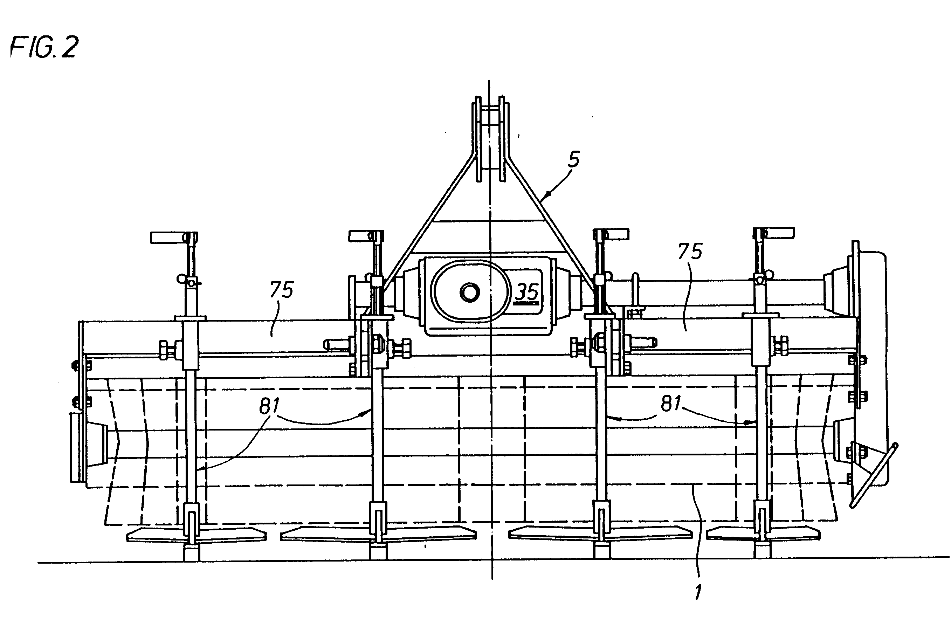

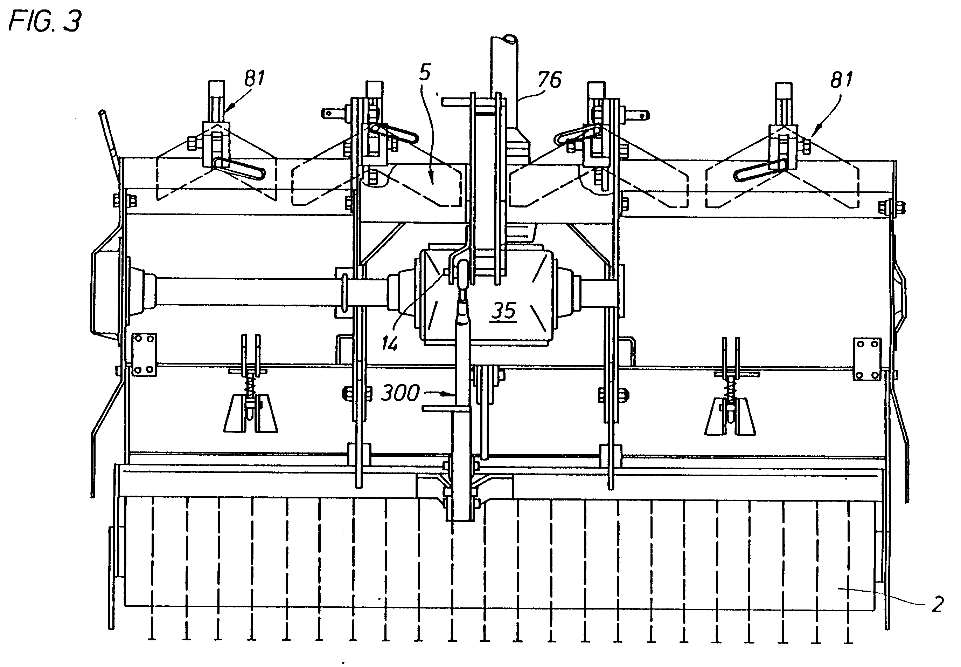

Fig. 1 bis 3 eine Seitenansicht, eine Vorderansicht sowie eine Draufsicht eines Geräteverbundes gemäß

EP 0 153 765 B2

der Erfindung.

Der dargestellte erfindungsgemäße Geräteverbund besitzt vordere Grubber- bzw. Scharwerkzeugt 81, einen zapfwellengetriebenen Zinkenrotor 1 sowie eine dahinter angeordnete Krümlerwalze 2.

Der Geräteverbund ist mit einem Zug- bzw. Schlepperfahrzeug gekoppelt, indem ein bockartiger Rahmen 5 mittels eines nur schematisch angedeuteten Dreipunktgestänges 7 an dem Zug- bzw. Schlepperfahrzeug höheneinstellbar angeordnet ist Der bockartige Rahmen 5 besteht im wesentlichen aus miteinander gegebenenfalls durch Traversen verbundenen Längsträgern 8 sowie einem damit verbundenen Ständerbock 9, an dessen - in Fahrtrichtung gesehen - dachförmig zueinander angeordneten Seitenteilen zur Längsrichtung leicht nach hinten geneigte Schrägglieder 10 fest angeordnet sind. An den vorderen Enden der Längsträger 8 sind Kupplungsstücke für die Unterlenker 7′ des Dreipunktgestänges angeordnet, während sich der geräteseitige Befestigungspunkt des Oberlenkers 7″ des Dreipunktgestänges 7 an den vorderen Enden der Schrägglieder 10 befindet.

Die Grubber- bzw. Scharwerkzeuge 81 sind unmittelbar am bockartigen Rahmen 5 bzw. daran angeflanschten seitlichen Auslegern 75 befestigt, welche den vom Ständerbock 9 umgrenzten Querschnitt für den Durchtritt der Zapfwelle 76 zum Getriebe 35 des Zinkenrotors vollständig freilassen.

Ein gehäuseartiger Rahmen 11 des Zinkenrotors 1 ist zur Halterung desselben am bockartigen Rahmen 5 an dessen Längsträgem 8 an nicht näher dargestellten Befestigungsbzw. Anschlußpunkten befestigt.

Der Tragrahmen 12 der Krümlerwalze 2 ist einerseits schwingerärtig an dafür vörgesehenen Anschlußpunkten an den hinteren Enden der Längsträger 8 befestigt und andererseits mittels einer Gestängeanordnung 300 höheneinstellbar gegen die Schrägglieder 10 abgestützt, welche an ihren hinteren Enden dafür geeignete Anschlußpunkte 14 besitzen.

Als Gestängeanordnung 300 ist eine teleskopartige Anordnung 302 vorgesehen, deren Teleskopteile 302′ und 302″ beispielsweise als rohrförmige Teile ineinander einschiebbar angeordnet sind. An beiden Teilen 302′ und 302″ sind miteinander fluchtende Lochreihen 310 angeordnet, in die Riegeltoile 311 bzw. Anschläge 312 eisetzbar sind. Dabei wird das Riegelteil 311 derart angeordnet, daß es sowohl im Teil 302′ als auch im Teil 302″ ein Loch der Lochreihen 310 durchsetzt und die Teile 302′ und 302″ unverschiebbar miteinander verbindet. Der Anschlag 312 durchsetzt lediglich ein Loch der im Teil 302′ angeordneten Lochreihe und bestimmt dementsprechend den maximalen Einschubweg des Teiles 302″ im Teil 302′ und damit die gewünschte Arbeitstiefe des Zinkenrotors 1 gegenüber der Krümlerwalze 2.

Das Riegelteil 311 wird in der Regel nur zum Transport des Geräteverbundes eingesetzt, um die Krümlerwalze 2 zusammen mit dem bockartigen Rahmen 5 anheben zu können. Zur Arbeit auf dem Feld wird das Riegelteil 311 im allgemeinen entfernt, so daß der Rahmen 5 mit dem Zinkenrotor 1 bei Bodenwellen, Steinen od. dgl. nach oben ausweichen kann, ohne daß das Gewicht der Krümlerwalze 2 den Zinkenrotor 1 oder die sonstigen Werkzeuge am bockartigen Rahmen 5 belastet. Dementsprechend werden die Zinken bzw. Werkzeuge geschont.

Gegebenenfalls können im Teil 302′ Schlitze 313 angeordnet sein, die mit fest am Teil 302″ angeordneten Zapfenteilen 314 od. dgl. zur Begrenzung der maximalen Beweglichkeit der Teile 302′ und 302″ relativ zueinander zusammenwirken. Die Schlitze 313 ermöglichen wiederum ein Höhenspiel des Zinkenrotors 1 bzw. der Grubberoder Scharwerkzeuge 81 gegenüber der Krümlerwalze 2. Der einstellbare Anschlag 312 am Teil 302″ bestimmt wiederum die gewünschte Arbeitstiefe des Zinkenrotors 1 gegenüber der Krümlerwalze 2.

**Patentansprüche**

1. Geräteverbund zur landwirtschaftlichen Bodenbearbeitung, mit
   – einem bockartigen Rahmen (5), welcher - vorzugsweise mittels Dreipunktgestänges (7) - anhebbar an ein Zug- bzw. Schlepperfahrzeug anköppelbar ist und ein vorderes, vorzugsweise austauschbares, Bodenbearbeitungsgerät trägt, z.B. Grubber- oder Scharwerkzeuge (81) und/oder zapfwellengetriebene Geräte, wie Zinkenrotoren (1), und
   – einem Tragrahmen (12), der ein weiteres Gerät, wie Krümlerwalze (2), trägt und als Verlängerung des bockartigen Rahmens (5) nach Art einer Schwinge um eine Querachse schwenkbar am bockartigen Rahmen (5) angeordnet ist,
   wobei
   – der am Zug- bzw. Schlepperfahrzeug höhenbeweglich halterbare bockartige Rahmen (5) sowie das daran angeordnete Bodenbearbeitungsgerät (1,81) bei der Bodenarbeit durch das am Tragrahmen (12) angeordnete weitere Gerät bzw. die Krümlerwalze (2) abstützbar sind, indem zwischen bockartigem Rahmen (5) und Tragrahmen (12) ein den Schwenkhub des Tragrahmens (12) relativ zum bockartigen Rahmen (5) nach oben begrenzendes teleskopartiges (302) mit einem ersten, am Bock (9) angelenkten

4

Gestängeteil (302′) sowie einem zweiten, damit verbundenen bzw. verbindbaren, am Tragrahmen (12) angelenkten Gestängeteil (302″) angeordnet ist, und

– dieses Gestänge (302) spielbehaftet ist, derart, daß der bockartige Rahmen (5) mit dem daran angeordneten Bodenbearbeitungsgerät (1,81) relativ zum Tragrahmen (12) bzw. zur Krümlerwalze (2) nach oben ausweichen kann, z.B. wenn das Bodenbearbeitungsgerät (1,81) auf Steine od.dgl. stößt, dadurch gekennzeichnet,

daß am einen Teil (302″) des teleskopartigen Gestänges (302), zur Begrenzung des maximalen Einschubweges der beiden Teile (302′,302″) des teleskopartigen Gestänges (302) vorgesehen ist, desser Teile (302′,302″) miteinander verriegelbar (Riegel 311) sowie in Ein- und Ausschubrichtung begrenzt (Schlitze 313, Zapfenteile 314) gegeneinander beweglich sind, wobei die beiden Teile (302′,302″) des teleskopartigen Gestänges Anordnung (302) als rohrförmige Teile ineinander einschiebbar und an beiden Teilen (302′,302″) miteinander fluchtende Lochreihen (310) angeordnet sind, in deren Löcher Steckelemente als bzw. Anschläge (312) einsetzbar sind, wobei das Riegelteil derart angeordnet wird, daß es sowohl im einen Teil (302′) als auch im anderen Teil (302″) ein Loch der Lochreihen (310) durchsetzt und die Teile (302′,302″) unverschiebbar miteinander verbindet, und wobei der Anschlag (312) lediglich ein Loch der Lochreihe (310) im einen Teil (302″) durchsetzt und dementsprechend den maximalen Einschubweg dieses Teiles (302″) im anderen Teil (302′) bestimmt.

## Revendications

1. Appareil combiné pour le travail du sol en agriculture, comprenant

   – un châssis en forme de chevalet (5) qui peut être attelé avec possibilité d'élévation à un véhicule tracteur ou remorqueur - de préférence au moyen d'un attelage à trois points (7) - et qui porte un appareil de travail du sol avant, de préférence interchangeable, par exemple des outils du type cultivateur ou soc (81) et/ou des appareils entraînés par l'arbre de prise de force, tels que des appareils à rotor à dents (1), et

   – un châssis porteur (12) qui porte un appareil additionnel tel qu'un rouleau émotteur (2), qui est articulé oscillant autour d'un axe transversal sur le châssis en forme de chevalet (5) comme un balancier dans le prolongement du châssis en forme de chevalet (5),

   dans lequel

   – le châssis en forme de chevalet (5) qui peut être agencé mobile en hauteur sur le véhicule tracteur ou remorqueur, ainsi que l'appareil de travail du sol (1, 81) agencé sur ce châssis, peuvent être étayés pendant le travail du sol par l'appareil additionnel, respectivement le rouleau émotteur (2), agencé sur le châssis porteur (12), grâce au fait qu'il est prévu entre le châssis en forme de chevalet (5) et le châssis porteur (12) une tringlerie (300, 302) qui limite vers le haut la course d'oscillation du châssis porteur (12) par rapport au châssis en forme de chevalet (5) et gui comprend un premier élément de tringlerie (301, 302′) articulé sur le chevalet (5) ainsi qu'un deuxième élément de tringlerie (299, 302″) relié ou pouvant être relié au premier élément et articulé sur le châssis porteur (12) et

   – cette tringlerie (300, 302) possède une liberté de telle manière que le châssis en forme de chevalet (5) puisse s'effacer vers le haut, avec l'appareil de travail du sol (1, 81) agencé sur ce châssis, par rapport au châssis porteur (12), respectivement au rouleau émotteur (2), par exemple lorsque l'appareil de travail du sol (1, 81) heurte des pierres ou équivalents,

   caractérisé

   en ce que, sur un élément (302″) est prévue, comme tringlerie télescopique (302), une butée réglable (312) destinée à limiter la course maximale d'emmanchement des deux éléments (302′, 302″) de la tringlerie télescopique (302), dont les deux éléments (302, 302″) peuvent être verrouillés l'un à l'autre (verrou 311) et sont libres de se déplacer l'un par rapport à l'autre dans une mesure limitée dans le sens de l'emmanchement ou de l'extraction (fentes 313, tétons 314), les deux éléments (302′, 302″) de la tringlerie télescopique (302), constitués par des éléments tubulaires, pouvant s'emmancher l'un dans l'autre, cependant qu'il est prévu sur les deux éléments (302′, 302″) des rangées de trous (310) alignés les sur les autres dans les trous desquelles on peut enfiler des broches jouant le rôle d'organes de verrouillage (311) ou de butées (312), l'organe de verrouillage étant agencé de manière à traverser un trou des rangées de trous (310) aussi bien dans l'élément (302′) que dans l'autre élément (302″) et à assembler les éléments (302′, 302″) l'un à l'autre par une liaison verrouillée en translation, et la butée (312) traversant seulement un trou de la rangée de trous (310) ménagée dans un élément (302″) et déterminant par conséquent la course maximale d'emmanchement de cet élément (302″) dans l'autre élément (302′).

## Claims

1. Combined machine for the agricultural working of the ground comprising
   – a stand-like frame (5) which is liftably couplable to a tow vehicle or tractor, preferably by means of a three point linkage (7), and which carries a front preferably interchangeable ground working apparatus, for example grubber or plough tools (81) and/or power take off shaft driven apparatus such as tined rotors (1), and
   – a support frame (12) which carries a further apparatus such as a roller tiller (2) and is pivotally arranged about a transverse axis on the stand-like frame (5) as an extension of the stand-like frame (5), in the manner of an arm,
   wherein
   – the stand-like frame (5), which can be vertically movably held on the tow vehicle or tractor, and also the ground preparation apparatus (1, 81) arranged on the stand-like frame, are supportable during the working of the ground by the further apparatus, or roller tiller (2), arranged on the support frame (12), in that a telescopic linkage (302) which restricts the pivotal stroke of the support frame (12) upwardly relative to the stand-like frame (5) is arranged between the stand-like frame (5) and the support frame (12) and comprises a first linkage part (302′) pivotally connected to the stand (9) and also a second linkage part (302″) which is connected with the first, or is connectable therewith, and which is pivotally connected to the support frame (12);
   and wherein
   – this linkage (302) is provided with play in such a way that the stand-like frame (5) with the ground working apparatus (1, 81) arranged thereon can deviate upwardly relative to the support frame (12) or the roller tiller (2), for example when the ground working apparatus (1, 81) strikes stones or the like, wherein an adjustable abutment (312) for limiting the maximum insertion path of the two parts (302′, 302″) of the telescope-like linkage (302) is provided on the one part (302″) of the telescope-like linkage, the parts (302′, 302″) of which are lockable to one another (bolt 311) and also restrictedly movable relative to one another in the insertion direction and in the extension direction (slot 313, spigot parts 314), wherein the two parts (302′, 302″) of the telescope-like linkage (302) are arranged as tubular parts which are insertable into each other, with mutually aligned hole rows (310) being provided at the two parts (302′, 302″), with plug elements being insertable into the holes of the hole rows as bolt parts (311) or abutments (312), with the bolt part being arranged such that it passes through a hole of the hole rows both in the one part (302′) and also in the other part (302″) and non-displaceably connects the parts (302′, 302″) with one another, and wherein the abutment (312) only passes through one hole of the hole row (310) in one part (302″) and accordingly determines the maximum insertion path of this parts (302″) in the other part (302′).

FIG. 1

FIG.2

EP 0 153 765 B2

FIG. 3